# EUROPEAN PATENT SPECIFICATION

(11) **EP 1 772 746 B1**
(45) Date of publication and mention of the grant of the patent: **04.03.2015**
(21) Application number: 05109347.4
(22) Date of filing: 07.10.2005
(51) Int. Cl.: G01S 7/00, G01S 13/72, G01S 13/86, G01S 13/87

(54) **Method and arrangement for data fusion**
Verfahren und Anordnung zur Datenfusion
Procédé et arrangement pour la fusion de données

(43) Date of publication of application: 11.04.2007
(73) Proprietor: SAAB AB, 581 88 Linköping (SE)
(72) Inventor: Norberg, Pär, 590 76, Vreta Kloster (SE); Ferm, Niklas, 582 74, Linköping (SE); Axelsson, Leif, 589 35, Linköping (SE)
(74) Representative: Zacco Sweden AB

(56) References cited:
- SAMUEL BLACKMAN, ROBERT POPOLI: "Design and Analysis of Modern Tracking Systems" 1999, ARTECH HOUSE RADAR LIBRARY , NORWOOD, MA 02062 , XP002374890 * figures 9.1-9.8 * * page 595 - page 598 * * page 613 - page 616 *
- DAVID L. HALL, JAMES LLINAS: "An Introduction to Multisensor Data Fusion" PROCEEDINGS OF THE IEEE, vol. 85, no. 1, January 1997 (1997-01), pages 6-23, XP011043797
- GAD A ET AL: "Data fusion architecture for maritime surveillance" INFORMATION FUSION, 2002. PROCEEDINGS OF THE FIFTH INTERNATIONAL CONFERENCE ON JULY 8-11, 2002, PISCATAWAY, NJ, USA,IEEE, vol. 1, 8 July 2002 (2002-07-08), pages 448-455, XP010595155 ISBN: 0-9721844-1-4

## Description

### Field of the invention

The invention relates in general to an arrangement and system for fusion of data generated by different sensors of different platforms. In particular the invention relates to an arrangement and system for fusion of data generated by different sensors of different aircrafts.

The invention also relates to a method for improving fusion of data.

Furthermore, the invention relates to software adapted to perform steps of the method for improving fusion of data when executed on a computer.

### Background

Airplanes are equipped with different sensors having unique characteristics. For example, radar sensors are arranged to measure distances to different objects, such as a foreign aircraft, with a relatively high accuracy. However, the corresponding angular values provided by radar sensors are not as accurate. Other sensors, like IRST, provide angular measurements to objects with a relatively high accuracy, but lack the ability to perceive distances.

Interception receivers measure both the distance and angle to objects relative the airplane on which they are positioned with relatively low accuracy, but they can be reliably used to estimate a number of characteristics of the object, such as which type of plane it is, depending upon the measured frequency of the disturbance waves, bandwidth, etc.

The use of a plurality of different kinds of sensors, each having unique characteristics and producing data of variable quality, for example, variable resolution, involves other drawbacks relating to the association and fusion of detected objects.

Within an aircraft fleet, or for individual aircraft, there is a need to have constantly updated, accurate information about objects in the surrounding environment. This is particularly true in military applications where a correct picture of the plane's surroundings is vital. At present, however, separate airplanes within a fleet detect different objects or perceive objects differently resulting in airplanes which have a unique picture of the surroundings differing from that perceived by the rest of the fleet.

Furthermore, transmission between aircraft travelling as a pair, a group or a fleet is associated with the problem of limited transmission capacity, resulting in a need for adequate data transmission.

### Summary of the invention

One object of present invention is to provide an improved association and fusion of data transmitted between platforms.

Another object of present invention is to provide a more correct picture of a surrounding for a platform.

These problems are solved by a method as in the appended claims.

One benefit of the method according to the present invention is that data fusion (involving cross bearing) is highly improved by using data links more effectively. This is done by controlling transmission between platforms such that only adequate information, such as target and/or threat data, is communicated via the data links. To determine which data are adequate, a situation analysis based on available information is performed. Furthermore, optimal use of the data links is achieved by providing the possibility of requesting and receiving treat/target data from cooperating platforms via the links.

The problems are also solved by the present invention which provides a novel platform as in the appended claims.

The present invention provides improved position estimation from inexact target data, in particular improved position estimation of target data from an interception receiver or radar warning system.

One positive outcome of the methods according to an aspect of the invention is that one symbol representing an object which contains all attributes from all sensors of cooperating platforms is achieved. The amount of communicated data within a system of cooperating platforms is reduced.

Implementation of the method according to the invention provides a more robust system, wherein individual platforms are less sensitive to intentional interference and confusing actions of, for example, hostile aircraft, because external data sources (sensors) of other cooperative platforms are used.

The methods are applicable to various types of sensors which are presently provided on platforms of interest. This advantageously means that there is no need to upgrade sensors to accommodate the novel procedure according to the invention. Known electro optical sensors such as IR-sensors can be used, as well as ground sensor nets.

Using the present methods, the amount of data which was previously exchanged between cooperating platforms is heavily reduced. The resultant reduction in data traffic allows the use of less complex links between individual platforms and links between platforms and control stations with a resultant economic benefit.

Advantageously the improved use of data amongst platforms cooperating according to the invention provides substantially improved accurateness of common data, in particular target data applications, such as a missile attack.

The dynamic use of data generated by different sensors of different platforms provides a plurality of advantages. A facilitated communication is achieved. Fewer misunderstandings between pilots and/or operators occur when reference can be made to the same object. In a totally automated embodiment a reduction in malfunctions is achieved. A positive outcome is that improved coordinated disturbance actions are allowed. Accordingly, an improved mission success is achieved.

By combining data generated by different kinds of sensors, a positive synergetic effect is achieved. Namely, sensors providing lower resolution data may be used without reducing the overall performance of the platforms. This allows the use of cheaper and simpler sensors.

The present invention further provides improved accuracy in the correlation between target data having poor position estimation but good attribute estimation and other target data sources.

One positive effect of the procedure according to the invention is that increased possibilities for automatic cooperation within a pair of platforms or groups are achieved.

According to an aspect of the invention threat/target awareness by the pilot/operator of an aircraft is improved through automatic processing of threat/target data.

A beneficial contribution resulting from application of the method according to the invention is increased association and fusion of targets and threats, which leads to a more reliable system and a reduced number of displayed objects for a pilot so as to facilitate decisions in a manned aircraft or for an operator in a ground station.

Another beneficial contribution resulting from application of the method according to the invention is that the basis for decision by a decision support system or a totally autonomous system is improved through clarification of the existing surrounding situation.

According to an aspect of the invention there is provided a communication system comprising at least two platforms wherein said at least two platforms are arranged for communication with each other.

### Brief description of the drawings

For a more complete understanding of the present invention and further objects and advantages thereof, reference is now made to the examples shown in the accompanying drawings, in which:
Figure 1 schematically illustrates an overview of a system according to an aspect of the present invention.
Figure 2 schematically illustrates a pair of airplanes and a communication centre according to an aspect of the present invention.
Figure 3 schematically illustrates exemplary implementation according to an aspect of the present invention.
Figure 4a schematically illustrates a first setup of an exemplary implementation according to an aspect of the present invention.
Figure 4b schematically illustrates a second setup of an exemplary implementation, according to an aspect of the present invention.
Figure 5 schematically illustrates a functional diagram according to an aspect of the present invention.
Figure 6a schematically illustrates a method for merging information data according to an aspect of the present invention.
Figure 6b schematically illustrates in grater detail a method for merging information data according to an aspect of the present invention.
Figure 7 schematically illustrates an apparatus according to an aspect of the present invention.

### Detailed description of the drawings

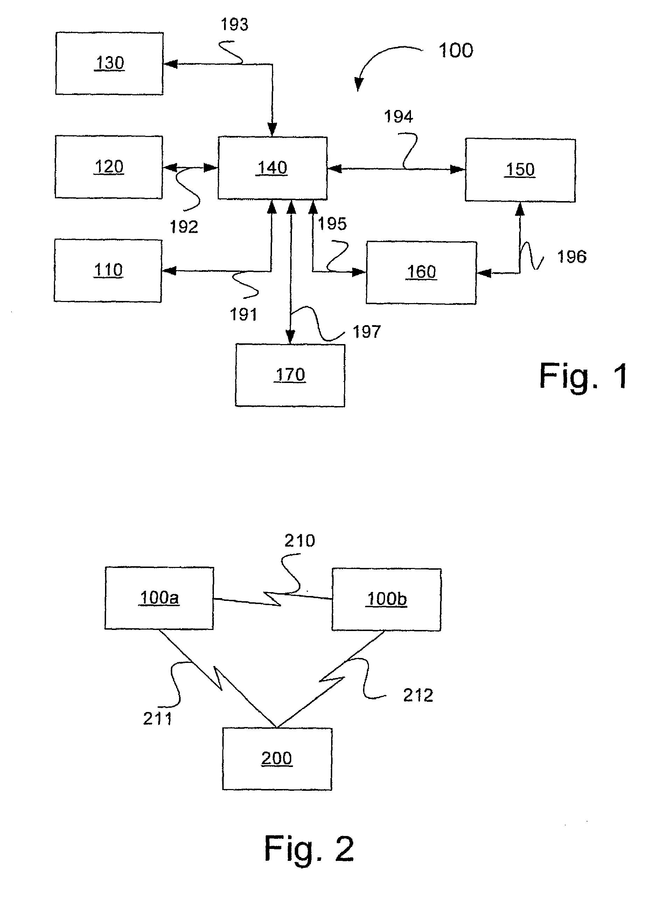

With reference to Figure 1 a platform 100 is shown. The platform can be an airplane such as a fighter, bomber, reconnaissance airplane, or a combination thereof. The platform can also be a helicopter, an unmanned aerial vehicle (UAV), a robot or a missile.

Herein the term "link" refers to a connection which may be a physical connector such as an optoelectronic communication wire, or a wireless connection, for example radio or microwave links.

Data generated by interception receivers, also referred to as radar warning units, are herein referred to as threat data. Data generated by radar sensors, also referred to as radar units, are herein referred to as target data. Data generated by IRST-sensors are herein also referred to as target data.

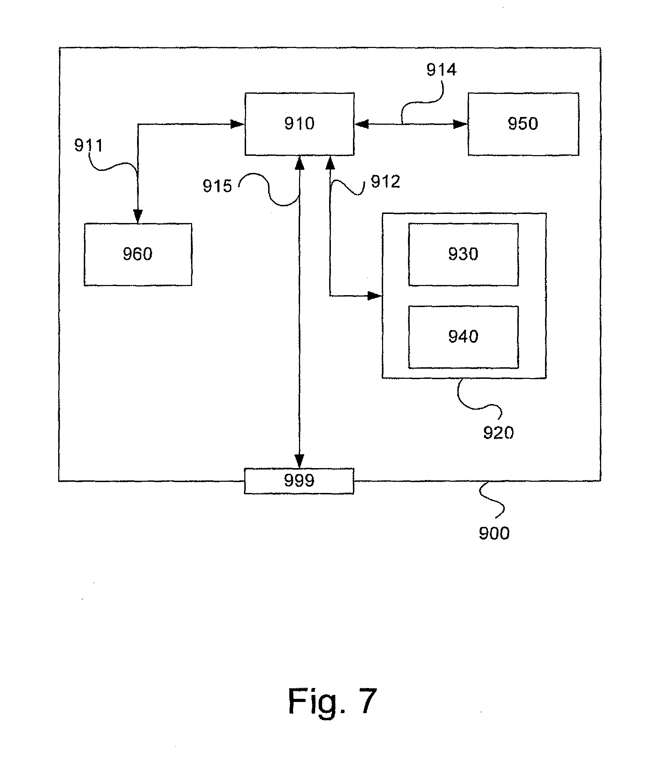

The platform 100 comprises a first sensor 110 adapted for communication with a control unit 140 via a first link 191. The platform 100 comprises a second sensor 120 adapted for communication with the control unit 140 via a second link 192. The platform 100 comprises a third sensor 130 adapted for communication with the control unit 140 via a third link 193. According to this embodiment, the first sensor 110 is a radar sensor (RDR). The second sensor 120 is an interception receiver (RWR), and the third sensor is an IFF-sensor. The control unit 140 is depicted in greater detail with reference to figure 7, below, The third sensor can be an optoelectronic sensor.

The control unit 140 is arranged for communication with an I/O-unit 170 via a link 197. The control unit 140 is arranged for communication with a first database 150 via a link 194. The control unit 140 is also arranged for communication with a second database 160 via a link 195. The first database 150 and the second database are adapted for communication via a link 196.

The sensors 110, 120 and 130 are adapted to communicate respective generated data, which is referred to as first information entities, to the control unit 140. The control unit is arranged to store the first information entities received from the sensors of the platform in the first data base 150. The I/O-unit 170 is arranged to receive second information entities, generated by sensors similar to sensors 110, 120 and 130, from a cooperative platform or communication terminal, not shown.

The control unit 140 is arranged to perform an association and fusion process involving cross bearing using the first and second information entities so as to achieve the coordinates of objects surrounding the platforms. The result of said association and fusion process is stored in the first database 150.

In order to achieve improved confidence of coordinates of the detected objects and the identity of the same, the control unit 140 is arranged to request and receive information entities from other platforms. Furthermore, the control unit 140 is arranged to transmit the result of the association and fusion of the first and second information entities, which is stored in the first database 150, to other platforms, which may form part of an aircraft fleet. Thus, according to one example application, other platforms may use the transmitted information of particular objects, match these with information comprising coordinates and status information of corresponding detected objects, and send updated, more accurate information on the relevant objects back to the platforms which generated the preliminary information.

The control unit 140 is arranged to store updated information relating to accurate information on detected objects such as coordinates of the objects, velocities of the objects and other characteristics like status indicating if the object is not part of the fleet related to the second database. The second database 160 is also referred to as a multi sensor database. Information stored in the second database is accurate enough to present to a pilot of a manned platform or an operator of a command centre provided on ground. The information stored in the second database 160 is preferably shared within the fleet

It should be noted that applications of the present invention apply to platforms such as watercraft and ground vehicles. Watercraft can, for example, be motorboats or sailing boats, etc. Ground vehicles can, for example, be automobiles, trucks, motorcycles, etc.

Figure 2 schematically illustrates two platforms 100a and 100b which are adapted for communication with each other via a link 210. The platforms 100a and 100b are further arranged for communication with a communication centre 200 via a link 211 and 212, respectively. The communication centre can be an immovable ground based centre, such as a building. Alternatively, the centre 200 can be a platform such as an airplane or a ground vehicle, for example an automobile or truck.

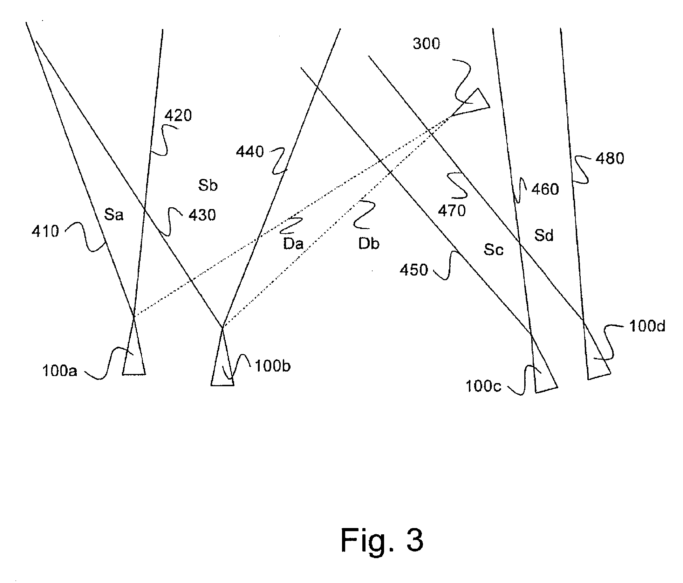

Figure 3 schematically illustrates one example of an application of the present invention, wherein a first aircraft 100a and a second aircraft 100b are provided. For purposes of clarity the example is only shown in 2D. However, the principles of the invention are of course applicable to a 3D application. The first aircraft has a sensor covering an area Sa defined by limits 410 and 420. The second aircraft 100b has a sensor covering an area Sb defined by limits 430 and 440.

A third aircraft 100c and a fourth aircraft 100d are also shown. The third aircraft 100c has a sensor covering an area Sc defined by limits 450 and 460. The fourth aircraft 100d has a sensor covering an area Sd defined by limits 470 and 480. The sensors mentioned above are radar sensors. It should however be noted that each of the aircraft 100a-d are provided with a radar warning sensor. The first aircraft 100a and the second aircraft 100b form a first pair of airplanes. The third aircraft 100c and the fourth aircraft 100d form a second pair of airplanes. The two pairs of airplanes form a group.

The first aircraft 100a and the second aircraft 100b detect an object 300 by means of their respective radar warning sensors, exchange bearings Da and Db with each other and perform a cross bearing so as to improve positioning of the object. The object 300 is a potential threat, such as a fighter. Neither the first aircraft 100a nor the second aircraft 100b can determine the position of the object by means of their respective radar while the object is outside the areas of coverage Sa and Sb. The first and second aircraft 100a and 100b communicate the threat bearings to the third and fourth aircraft 100c and 100d. The first and second aircraft 100a and 100b also communicate a request for target data from the third and fourth aircraft 100c and 100d.

The second pair of airplanes receives link data from the first pair of airplanes and performs cross bearing of the communicated threat bearings. The aircraft 100c and 100d perform an association procedure and fuse provided target data with threat data. Target data (radar data) which can be associated with threat data (cross bearing data) are communicated to the first and second aircraft 100a and 100b.

The first and second aircraft 100a and 104b receive target data from the third and fourth aircraft 104c and 100d and perform an association procedure and fusion target data with their own threat data. Knowledge of the prevailing situation has thus been considerably increased for the first and second aircraft 100a and 100b.

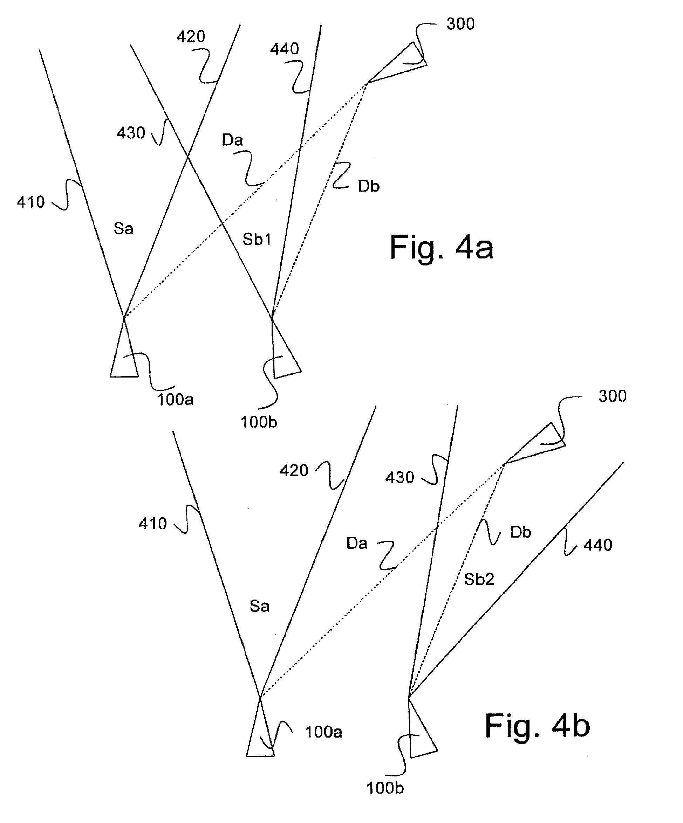

Figure 4a and 4b schematically illustrate one example of an application of present invention, wherein the first aircraft 100a and the second aircraft 100b are provided. The first aircraft has a sensor covering an area Sa defined by limits 410 and 420. The second aircraft 100b has a sensor covering an area Sb1 defined by limits 430 and 440.

The first and second aircraft 100a and 100b detect an object 300 by means of a radar warning sensor. The first and second aircraft 100a and 100b exchange threat bearings Da and Db via a data link and perform a cross bearing so as to improve position determination of the object 300. Neither the first aircraft 100a nor the second aircraft 100b can determine the position of the object 300 by means of their respective radar while the object 300 is outside the present areas of coverage Sa and Sb1.

As shown in Figure 4b, the first aircraft 100a requests target data (corresponding to a new area Sb2) from the aircraft 100b via the data link. The second aircraft 100b is then changing its radar's area of coverage to the new area Sb2, associating threat data (from cross bearing) with target data (from radar), and communicating target data to the first aircraft 100a. The first aircraft 100a receives target data from the second aircraft 100b and associates threat data with target data.

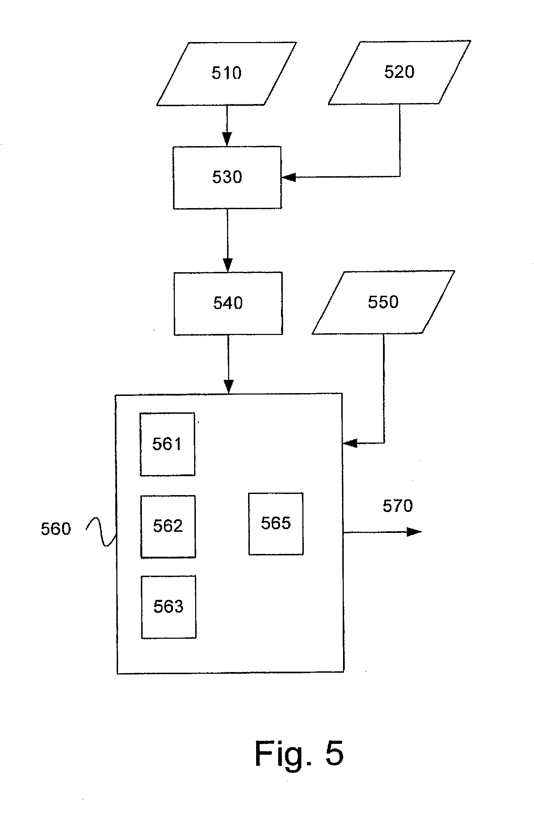

Figure 5 schematically depicts a functional architecture of an aspect of the present invention. Data block 510 comprises information generated by the sensors 110, 120 and 130 of the platform, not shown. Data block 520 comprises information generated by the sensors 110, 120 and 130 of cooperating platforms, e.g. 100b, not shown. The data blocks 510 and 520 comprise target data from radar specifying position and velocity of an object 300, not shown. Alternatively, when the radar of the platform or the cooperating platforms is disturbed registered direction, frequency and frequency band are provided by the sensor 130 (IFF), which data also can be used in cross bearing so as to locate the object 300.

Data blocks 510 and 520 comprise status information of the object 300 (foreign air-craft/member of fleet). Data blocks 510 and 520 comprise threat data from the sensor 120 depicting flight direction, identity (type of aircraft or airplane), frequency and PRI.

In block 530 cross bearing is performed based on threat data/disturbance data with help of bearings from the platform and the cooperative platforms. According to one embodiment of the invention identity data, frequency data and PRI are used in the association.

In block 540 objects resulting from the performed cross bearing are fused (bearing upon e.g. position and identity) with targets detected by means of other sources (radar, IFF, etc.).

In block 560 a plurality of processes are performed. The processes relate to analysis of situation and decision support. The different blocks are arranged to generate and provide information about what complementary information is needed for the platform, analyse what information cooperating platforms have, and what cooperating platforms need. The processes are adapted to analyse what relevant data is to be communicated and requested.

A block 561 comprises functionality for control of sensors provided on the platform of interest. A block 562 comprises functionality for selection of information which is to be selected. A block 563 comprises functionality for control of counter-measurement devices. A block 565 comprises functionality for requesting complement data such as threat/target data or other data. This complement data is directed towards communication with cooperative platforms. An output 570 comprises information relevant for transmission, such as requests for complementary data.

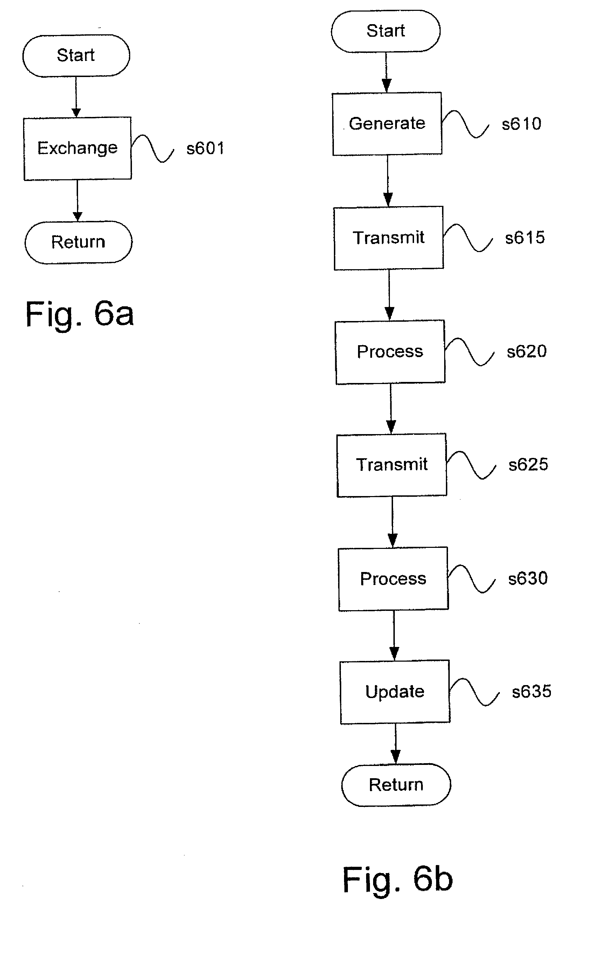

Figure 6a schematically illustrates a method for exchanging data within a group of at least two platforms according to an aspect of the invention. The method comprises a first method step s601. The first method step s601 comprises the steps of:
- generating a first information entity comprising information about a first bearing from a first platform to an object;
- generating a second information entity comprising information about a second bearing from a second platform to the object;
- transmitting said second information entity from the second platform to the first platform;
wherein the method is characterized by
- performing cross bearing of the first and second bearings so as to position the object in space; and
- transmitting the generated position of the object to a platform within the group.

Preferably the method comprises the step of:
- transmitting the generated position of the object to a platform within the group upon request.

The method, according to one embodiment of the invention, for merging data from different sensors of different platforms within a single platform, comprises steps clarified below.
A first step is to generate a first information entity. This is also referred to as to performing a cross bearing,
A second step is to receive a second information entity. This refers to other data, for example processed radar data indicating positions of objects.
A third step is to process the first and second information entities. This refers to performing association and fusion processes.
A fourth step is to analyse said processed first and second information entities. This refers to performing a situation analysis.

A fifth step is to perform an action event in response to the analysis. This refers to generating decision support. The decision support is data which can be used by an operator of a platform.

Figure 6b schematically illustrates in greater detail a method for merging information according to an aspect of the invention. The method comprises a first method step s610. In method step s610 a first unique information entity is generated within at least one platform of a first setup of platforms. Two different platforms generate two mutually different first information entities. The generated first information entity comprises information about bearings from the platfonn to at least one object. According to one aspect of the invention each generated first information entity comprises threat data, i.e. data generated by an interception receiver in the relevant platform.

Further, a cross bearing is performed of the mutually different bearings so as to achieve a second information entity comprising information about velocity and position in space of the at least one object. After the method step s610 a subsequent method step s615 is performed.

In the method step s615 the generated second information entity is transmitted from at least one platform of the first setup of platforms to at least one platform of a second setup of platforms. After the method step s615 a subsequent method step s620 is performed.

In the method step s620 the transmitted second information entity is processed. The processing comprises association of objects depicted by the transmitted second information entity with a third generated information entity. The third information entity is generated in at least one of the platforms of the second setup of platforms. The third information entity comprises information, such as positions and velocities of objects generated within the second setup of platforms. The third information entity is preferably generated by sensors different from those which generate the first information entities. According to one embodiment the sensors generating the third information entities are radars and/or IFF-sensors, i.e. so called target data. The second and third information entities further comprise information about characteristics of the different objects. When performing an association process of data relating to the objects of the second and third information entities, care is taken with regard to these characteristics these characteristics so as to facilitate fusion of the objects. Method step s620 thus results in a matching procedure of objects detected and registered by different sensors from different platforms. This achieves a more correct picture of a situation which concerns platforms from both the first and second setup of platforms. In some association and fusion processes not all objects detected from different sensors are matched with each other. However, matching objects are in general considered to be real and existing with a high level of confidence. The results of the association and fusion processes result in a generated fourth information entity. The fourth information entity comprises information about a common description of objects in a defined area, preferably in 3D. After the method step s620 a subsequent method step s625 is performed.

In the method step s625 the fourth information entity information is transmitted from at least one platform of the second setup of platforms to at least one platform of the first setup of the platforms. After the method step s625a subsequent method step s630 is performed.

In the method step s630 processing of the fourth information entity is performed within the first setup of platforms. The fourth information entity is provided to a control unit of a receiving platform and implemented therein. The fourth information entity provides an improved picture of the positions, velocities and status of the objects surrounding the first and second setups of platforms. After the method step s630 a subsequent method step s635 is performed.

In the method step s635 the platforms within the first and second setups of platforms are updated depending upon the fourth information entity. Further, a part of the fourth information entity can be displayed for a pilot of a platform or transmitted to a third setup of platforms for further processing. After the method step s635 the method ends.

With reference to Figure 7, a diagram of one embodiment of an apparatus 900 is shown. The above-mentioned computer 530 (not shown) or a monitoring device (not shown) may include apparatus 900. Apparatus 900 comprises a non-volatile memory 920, a data processing device 910 and a read/write memory 950. Non-volatile memory 920 has a first memory portion 930 wherein a computer program, such as an operating system, is stored for controlling the function of apparatus 900, Further, apparatus 900 comprises a bus controller, a serial communication port, I/O-means, an A/D-converter, a time date entry and transmission unit, an event counter and an interrupt controller (not shown). Non-volatile memory 920 also has a second memory portion 940.

A computer program comprising routines for fusion of data, for example data from a first sensor and a second sensor, is provided. The program may be stored in an executable manner or in a compressed state in a separate memory 960 and/or in read/write memory 950,

Data processing device 900 may be, for example, a microprocessor.

When it is described that data processing device 910 performs a certain function it should be understood that data processing device 910 performs a certain part of the program which is stored in separate memory 960, or a certain part of the program which is stored in read/write memory 950.

Data processing device 910 may communicate with a data port 999 by means of a data bus 915. Non-volatile memory 920 is adapted for communication with data processing device 910 via a data bus 912. Separate memory 960 is adapted to communicate with data processing device 910 via a data bus 911. Read/write memory 950 is adapted to communicate with data processing device 914 via a data bus 914.

When data is received on data port 999 it is temporarily stored in second memory portion 940. When the received input data has been temporarily stored, data processing device 910 is set up to perform execution of code in a manner described above. According to one embodiment, data received on data port 999 comprises information such as bearings from a platform and an object, position of an object, and velocity of an object. This information can be used by apparatus 900 so as to perform fusion of data provided by different sensors according to the invention.

Parts of the methods described herein can be performed by apparatus 900 by means of data processing device 910 running the program stored in separate memory 960 or read/write memory 950. When apparatus 900 runs the program, parts of herein described methods are executed.

An aspect of the invention relates to a computer programme comprising a programme code for performing the method steps depicted with reference to Fig. 6a and 6b, when the computer programme is run on a computer.

An aspect of the invention relates to a computer programme product comprising a program code stored on computer-readable media for performing the method steps depicted with reference to Fig. 6a and 6b, when the computer programme is run on the computer.

An aspect of the invention relates to a computer programme product directly storable in an internal memory into a computer, comprising a computer programme for performing the method steps depicted with reference to Fig, 6a and 6b, and method steps according to the invention, when the computer programme is run on the computer.

## Claims

1. Method for merging data from different (110, 120,130) sensors of different platforms within a single platform, comprising the steps of:
- generating (s610) at a first platform a first information entity, comprising the steps of
- associating a first data set generated by a first sensor of said first platform with a second data set generated by a second sensor of said first platform;
- performing a fusion process of the associated data sets, and
- generating the first information entity depending upon the performed fusion process;
- receiving a second information entity related to a second cooperative platform;
- processing the first and second information entities;
**characterized by**
- analysing said processed first and second information entities; and
- performing an action event in response to the analysis, comprising the steps of:
- generating a decision whether or not to generate a request,
wherein said generating depends upon said analysis, and wherein said request comprises a request for at least one additional specified complementary information entity from at least a third platform.

2. Method according to claim 1, **characterized by**
- transmitting a second data set before the associating step.

3. Method according to claim 1 or 2, **characterized in that** the step of processing the first and second information entities comprises the steps of:
- associating first content of the first information entity with second content of the second information entity; and
- performing a fusion process of the associated content, so as to correlate the first and second content.

4. Method according to any of claims 1-3, **characterized by**
- transmitting the request, and
- receiving said at least one additional specified complementary information entity in response to the transmitted request.

5. Method according to any of claims 1-4, **characterized by**
- analysing said processed first and second information entities depending upon a predetermined criterion.

6. Method according to any of claims 1-5, **characterized in**
**that** the step of performing an action event comprises at least one of the steps of:
- transmitting the processed first and second information entity, and
- requesting at least one complementary information entity.

7. Platform, comprising
means for generating a first information entity (110, 120, 130, 140);
means for associating a first data set generated by a first sensor with a second data set generated by a second sensor;
means for performing a fusion process of the associated data sets, and means for generating the first information entity depending upon the performed fusion process.
means for receiving a second information entity (170; 999) related to a second cooperative platform;
means for processing the first and second information entities (140, 900, 150, 160);
**characterized by**
means for analysing said processed first and second information entities (140, 900), which means for analysing comprising:
means for transmitting the processed first and second information entity related to at least a third platform, and
means for requesting at least one complementary information entity; and
means for performing an action event in response to the analysis (140, 900).

8. Platform according to claim 7, wherein the platform is selected from the group consisting of: an airplane, an unmanned airborne vehicle, and a helicopter.

9. Platform according to any of claims 7-9, **characterized by**
means for associating a first content of the first information entity with a second content of the second information entity; and
means for performing a fusion process of the associated content so as to correlate the first and second content.

10. Communication system comprising at least two platforms according to any of claims 7-9, wherein said at least two platforms are arranged to communicate with each other.

11. Computer programme comprising a programme code for performing the method steps of any of claims 1-6, when said computer programme is run on a computer.

12. Computer programme product comprising a program code stored on a computer readable media for performing the method steps of any of claims 1-6, when said computer programme is run on the computer.

13. Computer programme product directly storable in an internal memory of a computer, comprising a computer programme for performing the method steps according to any of claims 1-6, when said computer programme is run on the computer.

## Patentansprüche

1. Verfahren zum Zusammenführen von Daten von verschiedenen (110, 120, 130) Sensoren verschiedener Plattformen innerhalb einer einzigen Plattform, umfassend die nachfolgenden Schritte:
an einer ersten Plattform erfolgendes Erzeugen (s61 0) einer ersten Informationsentität,
umfassend die nachfolgenden Schritte:
Verknüpfen eines von einem ersten Sensor der ersten Plattform erzeugten ersten Datensatzes mit einem von einem zweiten Sensor der ersten Plattform erzeugten zweiten Datensatz;
Durchführen eines Fusionsprozesses der verknüpften Datensätze; und
Erzeugen der ersten Informationsentität in Abhängigkeit von dem durchgeführten Fusionsprozess;
Empfangen einer zweiten Informationsentität mit Bezug auf eine zweite kooperierende Plattform;
Verarbeiten der ersten und zweiten Informationsentitäten;
**gekennzeichnet durch**
Analysieren der verarbeiteten ersten und zweiten Informationsentitäten; und
Durchführen eines Handlungsvorganges in Reaktion auf die Analyse, umfassend die nachfolgenden Schritte:
Erzeugen einer Entscheidung, ob eine Anforderung erzeugt werden soll,
wobei das Erzeugen von der Analyse abhängt und wobei die Anforderung eine Anforderung wenigstens einer zusätzlichen, spezifizierten, komplementären bzw. ergänzenden Informationsentität von wenigstens einer dritten Plattform umfasst.

2. Verfahren nach Anspruch 1, **gekennzeichnet durch**
Übertragen eines zweiten Datensatzes vor dem Verknüpfungsschritt.

3. Verfahren nach Anspruch 1 oder 2, **dadurch gekennzeichnet, dass** der Schritt des Verarbeitens der ersten und zweiten Informationsentitäten die nachfolgenden Schritte umfasst:
Verknüpfen eines ersten Inhaltes der ersten Informationsentität mit einem zweiten Inhalt der zweiten Informationsentität; und
Durchführen eines Fusionsprozesses des verknüpften Inhaltes zur Korrelierung des ersten und zweiten Inhaltes.

4. Verfahren nach einem der Ansprüche 1 bis 3, **gekennzeichnet durch** Übertragen der Anforderung; und
Empfangen der wenigstens einen zusätzlichen, spezifizierten, komplementären bzw. ergänzenden Informationsentität in Reaktion auf die übertragene Anforderung.

5. Verfahren nach einem der Ansprüche 1 bis 4, **gekennzeichnet durch** Analysieren der verarbeiteten ersten und zweiten Informationsentitäten in Abhängigkeit von einem vorbestimmten Kriterium.

6. Verfahren nach einem der Ansprüche 1 bis 5, **dadurch gekennzeichnet, dass** der Schritt des Durchführens eines Handlungsvorganges wenigstens einen der nachfolgenden Schritte umfasst:
Übertragen der verarbeiteten ersten und zweiten Informationsentität; und
Anfordern wenigstens einer komplementären bzw. ergänzenden Informationsentität.

7. Plattform, umfassend:
Mittel zum Erzeugen einer ersten Informationsentität (110, 120, 130, 140);
Mittel zum Verknüpfen eines von einem ersten Sensor erzeugten ersten Datensatzes mit einem von einem zweiten Sensor erzeugten zweiten Datensatz;
Mittel zum Durchführen eines Fusionsprozesses der verknüpften Datensätze; und
Mittel zum Erzeugen der ersten Informationsentität in Abhängigkeit von dem durchgeführten Fusionsprozess;
Mittel zum Empfangen einer zweiten Informationsentität (170; 999) mit Bezug auf eine zweite kooperierende Plattform;
Mittel zum Verarbeiten der ersten und zweiten Informationsentitäten (140, 900, 150, 160);
**gekennzeichnet durch**
Mittel zum Analysieren der verarbeiteten ersten und zweiten Informationsentitäten (140, 900), wobei die Mittel zum Analysieren umfassen:
Mittel zum Übertragen der verarbeiteten ersten und zweiten Informationsentität mit Bezug auf wenigstens eine dritte Plattform; und
Mittel zum Anfordern wenigstens einer komplementären bzw. ergänzenden Informationsentität; und
Mittel zum Durchführen eines Handlungsvorganges in Reaktion auf die Analyse (140, 900).

8. Plattform nach Anspruch 7, wobei die Plattform aus einer Gruppe ausgewählt ist, die aus einem Flugzeug, einem unbemannten Luftfahrzeug und einem Hubschrauber besteht.

9. Plattform nach einem der Ansprüche 7 bis 9, **gekennzeichnet durch**
Mittel zum Verknüpfen eines ersten Inhaltes der ersten Informationsentität mit einem zweiten Inhalt der zweiten Informationsentität; und
Mittel zum Durchführen eines Fusionsprozesses des verknüpften Inhaltes zur Korrelierung des ersten und zweiten Inhaltes.

10. Kommunikationssystem, umfassend wenigstens zwei Plattformen nach einem der Ansprüche 7 bis 9, wobei die wenigstens zwei Plattformen derart angeordnet sind, dass sie miteinander kommunizieren.

11. Computerprogramm, umfassend einen Programmcode zum Durchführen der Verfahrensschritte nach einem der Ansprüche 1 bis 6, wenn das Computerprogramm auf einem Computer läuft.

12. Computerprogrammerzeugnis, umfassend einen auf einem computerlesbaren Medium gespeicherten Programmcode zum Durchführen der Verfahrensschritte nach einem der Ansprüche 1 bis 6, wenn das Computerprogramm auf dem Computer läuft.

13. Computerprogrammerzeugnis, das direkt in einem internen Speicher eines Computers speicherbar ist, umfassend ein Computerprogramm zum Durchführen der Verfahrensschritte nach einem der Ansprüche 1 bis 6, wenn das Computerprogramm auf dem Computer läuft.

## Revendications

1. Procédé destiné à fusionner des données provenant de différents (110, 120, 130) capteurs de différentes plateformes en une seule plateforme, comprenant les étapes consistant à :
- générer (s610) au niveau d'une première plateforme une première entité d'information, comprenant les étapes consistant à
- associer un premier ensemble de données généré par un premier capteur de ladite première plateforme à un deuxième ensemble de données généré par un deuxième capteur de ladite première plateforme ;
- réaliser un procédé de fusion des ensembles de données associés, et
- générer la première entité d'information en fonction du procédé de fusion réalisé ;
- recevoir une deuxième entité d'information liée à une deuxième plateforme de coopération ;
- traiter les première et deuxième entités d'information ;
**caractérisé par**
- l'analyse desdites première et deuxième entités d'information traitées ; et
- la réalisation d'un événement d'action en réponse à l'analyse, comprenant les étapes consistant à :
- générer une décision pour savoir s'il faut générer ou non une demande,
dans lequel ladite génération dépend de ladite analyse, et dans lequel ladite demande comprend une demande d'au moins une entité d'information complémentaire spécifiée supplémentaire provenant d'au moins une troisième plateforme.

2. Procédé selon la revendication 1, **caractérisé par**
- la transmission d'un deuxième ensemble de données avant l'étape d'association.

3. Procédé selon la revendication 1 ou 2, **caractérisé en ce que** l'étape de traitement des première et deuxième entités d'information comprend les étapes consistant à :
- associer un premier contenu de la première entité d'information à un deuxième contenu de la deuxième entité d'information ; et
- réaliser un procédé de fusion des contenus associés, de manière à corréler les premier et deuxième contenus.

4. Procédé selon l'une quelconque des revendications 1-3, **caractérisé par**
- la transmission de la demande, et
- la réception de ladite au moins une entité d'information complémentaire spécifiée supplémentaire en réponse à la demande transmise.

5. Procédé selon l'une quelconque des revendications 1-4, **caractérisé par**
- l'analyse desdites première et deuxième entités d'information traitées en fonction d'un critère prédéterminé.

6. Procédé selon l'une quelconque des revendications 1-5, **caractérisé en ce que** l'étape de réalisation d'un événement d'action comprend au moins une des étapes consistant à :
- transmettre les première et deuxième entités d'information traitées, et
- demander au moins une entité d'information complémentaire.

7. Plateforme, comprenant
un moyen destiné à générer une première entité d'information (110, 120, 130, 140) ;
un moyen destiné à associer un premier ensemble de données généré par un premier capteur à un deuxième ensemble de données généré par un deuxième capteur ;
un moyen destiné à réaliser un procédé de fusion des ensembles de données associés, et
un moyen destiné à générer la première entité d'information en fonction du procédé de fusion réalisé
un moyen destiné à recevoir une deuxième entité d'information (170 ; 999) liée à une deuxième plateforme de coopération ;
un moyen destiné à traiter les première et deuxième entités d'information (140, 900, 150, 160) ;
**caractérisée par**
un moyen destiné à analyser lesdites première et deuxième entités d'information traitées (140, 900), ledit moyen d'analyse comprenant :
un moyen destiné à transmettre les première et deuxième entités d'information traitées liées à au moins une troisième plateforme, et
un moyen destiné à demander au moins une entité d'information complémentaire ; et
un moyen de réalisation d'un événement d'action en réponse à l'analyse (140, 900).

8. Plateforme selon la revendication 7, dans laquelle la plateforme est sélectionnée dans le groupe constitué : d'un avion, d'un véhicule volant sans pilote et d'un hélicoptère.

9. Plateforme selon l'une quelconque des revendications 7-9, **caractérisée par**
un moyen destiné à associer un premier contenu de la première entité d'information à un deuxième contenu de la deuxième entité d'information ; et
un moyen destiné à réaliser un procédé de fusion des contenus associés de manière à corréler les premier et deuxième contenus.

10. Système de communication comprenant au moins deux plateformes selon l'une quelconque des revendications 7-9, dans lequel lesdites au moins deux plateformes sont conçues pour communiquer l'une avec l'autre.

11. Programme informatique comprenant un code de programme destiné à réaliser les étapes de procédé selon l'une quelconque des revendications 1-6, quand ledit programme informatique est exécuté sur un ordinateur.

12. Produit de programme informatique comprenant un code de programme stocké sur un support lisible par ordinateur pour réaliser les étapes de procédé selon l'une quelconque des revendications 1-6, quand ledit programme informatique est exécuté sur l'ordinateur.

13. Produit de programme informatique directement lisible dans une mémoire interne d'un ordinateur, comprenant un programme informatique pour réaliser les étapes de procédé selon l'une quelconque des revendications 1-6, quand ledit programme informatique est exécuté sur l'ordinateur.
